# EUROPÄISCHE PATENTANMELDUNG

(11) **EP 2 090 952 A2**
(43) Veröffentlichungstag der Anmeldung: **19.08.2009**
(21) Anmeldenummer: 09001234.5
(22) Anmeldetag: 29.01.2009
(51) Int. Cl.: G05B 23/02

(54) **Hydraulikkomponenten-Steuergerät und Verfahren zum Ansteuern von hydraulischen Komponenten**

(30) Priorität: 14.02.2008 DE 102008009392; 11.03.2008 DE 102008021313
(71) Anmelder: ROBERT BOSCH GMBH, 70469 Stuttgart (DE)
(72) Erfinder: Brand, Michael, 89075 Ulm (DE); Rückert, Reinhart, 89358 Kammeltal (DE); Müller, Tobias, 89415 Lauingen (DE)
(74) Vertreter: Thürer, Andreas

(57) **Zusammenfassung**

Es wird ein Hydraulikkomponenten-Steuergerät und ein Verfahren zum Ansteuern einer Vielzahl hydraulischen Komponenten bereitgestellt.

Das Verfahren zum Steuern von hydraulischen Komponenten mittels eines Steuergeräts, das einen Mikrokontroller aufweist, weist folgende, nacheinander abfolgende Schritte aufweist:
- Ansteuern der hydraulischen Komponenten mittels einer in dem Mikrokontroller implementierten Steuerungsfunktion;
- Überwachen der Steuerungsfunktion mit Hilfe einer auch im Mikrokontroller implementierten Überwachungsfunktion;
- Überwachen der Überwachungsfunktion durch die Steuerungsfunktion.

Auf dem Mirkokontroller des Steuergeräts ist eine Software zur Ausführung des Verfahrens vorgehalten.

## Beschreibung

Die Erfindung betrifft ein Hydraulikkomponenten-Steuergerät sowie ein Verfahren zum Ansteuern hydraulischer Komponenten mittels eines Steuergeräts. Fehler in Steuergeräten für hydraulische Komponenten wie Antriebshydrauliken und Arbeitshydrauliken in mobilen Arbeitsmaschinen stellen Risiken für die Umgebung der mobilen Arbeitsmaschinen dar. Mobile Arbeitsmaschinen sind beispielsweise Baumaschinen, Landmaschinen oder Kommunalmaschinen. Für Steuergeräte solcher mobiler Arbeitsmaschinen ist wie für alle Maschinen mit Sicherheitsanforderungen eine Risikoanalyse durchzuführen. Die Maschine wird dabei in sicherheitsbezogene Teile SRP/CS (safety related part control system) unterteilt, wobei jede SRP/CS sicherheitsbezogene Eingangssignale und sicherheitsbezogene Ausgangssignale hat. Für jede SRP/CS der Maschine wird dann anhand der Norm " Sicherheit von Maschinen - Sicherheitsbezogene Teile von Steuerungen - Teil 1: Allgemeine Gestaltungsleitsätze DIN EN ISO 13849-1:2006" ein sog. Performance Level hinsichtlich der Sicherheitsanforderungen festgelegt und anschließend eine Sicherheitskategorie für das sicherheitsbezogene Teil festgelegt, die die eine ausreichende Risikominimierung darstellt.

Die Sicherheitskategorien 3 oder 4 erfordern, dass ein Einzelfehler in einer Systemkomponente, die die Sicherheitsfunktion beeinflusst, nicht zum Verlust der Sicherheitsfunktion führen darf. Alle Fehler, die zum Verlust der Sicherheitsfunktion führen, müssen innerhalb der Zeit, in der sich der Fehler kritisch auswirken kann, der so genannten Fehlertoleranzzeit, aufgedeckt werden können. Zudem muss ein Überführen des Systems in einen sicheren Zustand gewährleistet sein oder die Fehler müssen über wirksame externe Maßnahmen bzgl. des elektronischen Steuerungssystems behandelt werden.

In der besagten Norm wird für Kategorie 3 eine zweikanalige Architektur vorgeschlagen. Dabei werden die steuernden Logikeinheiten mehrfach vorgesehen und die Berechnungen der Logikeinheiten über einen Kreuzvergleich miteinander verglichen. Um mehrere Logikeinheiten vorzusehen, wird der Aufwand an benötigter Hardware erhöht, was auch die Stückkosten für die Maschine erhöht.

In der DE 44 38 714 A1 wird bezüglich einer Steuerung einer Verbrennungskraftmaschine beschrieben, dass in einem Mikrocomputer drei Ebenen vorgesehen werden, eine Funktionsebene, eine Überwachungsebene und eine Kontrollebene, wobei die Funktionsebene die Verbrennungskraftmaschine ansteuert und die Überwachungsebene das Ansteuern überwacht. Die Kontrollebene testet die Speicherelemente und überprüft mittels eines Watchdogs die korrekte Durchführung der Softwarefunktion der Kontrollebene.

Aufgabe der Erfindung ist es, ein Verfahren zum Betrieb von hydraulischen Komponenten mittels eines Steuergeräts bereitzustellen, das hohen Sicherheitsanforderungen insbesondere bei geringen Anforderungen an die Hardware des Steuergeräts genügt. Eine weitere Aufgabe der Erfindung ist es, ein Hydraulikkomponenten-Steuergerät bereitzustellen, mit dem auch hohe Sicherheitsanforderungen mit geringem Schaltungsaufwand erfüllt werden können.

Erfindungsgemäß wird diese Aufgabe durch den Gegenstand der unabhängigen Patentansprüche gelöst. Vorteilhafte Weiterbildungen der Erfindung sind Gegenstand der abhängigen Patentansprüche.

Erfindungsgemäß wird ein Verfahren zum Steuern von hydraulischen Komponenten mittels eines Steuergeräts bereitgestellt, bei dem sich eine Steuerungsfunktion für die Ansteuerung der hydraulischen Komponenten und eine Überwachungsfunktion gegenseitig überwachen.

Dadurch können mit einer recht einfachen Software- und Hardwarestruktur Anforderungen der Sicherheitskategorie 3 oder 4 erfüllt werden. Insbesondere brauchen keine zwei Prozessoren für die unterschiedliche Funktionen, d.h. die Steuerungsfunktion und die Überwachungsfunktion, vorgesehen werden.

Dabei wird ausgenutzt, dass die Norm DIN EN ISO 13849-1:2006 gemäß Kapitel 6.2.2 auch andere Architekturen als die vorgeschlagenen erlaubt, wenn die Anforderungen der Kategorie eingehalten werden.

Da die Steuerungsfunktion so eingerichtet ist, dass sie auch zum Überwachen der Überwachungsfunktion dient, überwachen sich beide Funktionen gegenseitig, so dass auch Einzelfehler der Überwachungsfunktion erkannt werden. Eine herkömmliche, separat ausgeführte Kontrollfunktion, die wiederum die Überwachungsfunktion überwacht, kann eingespart werden.

Zudem kann ein Watchdog zur Überwachung der Funktionen des Mikrokontrollers vorgesehen werden, wobei der Watchdog vorzugsweise in einer Schaltung außerhalb eines Prozessors des Mikrokontrollers vorgesehen ist und seine Eingangs- und Ausgangssignale von der Überwachungsfunktion empfängt. Der Watchdog hat vorzugsweise die Fähigkeit die Leistungsausgänge des Steuergerätes 20 abzuschalten. Das Vorsehen des Watchdogs außerhalb des Prozessors gewährleistet, dass er von Fehlern des Prozessors nicht betroffen sein kann. Dass nur die Überwachungsfunktion den Watchdog triggert, vereinfacht das Softwarekonzept. Die ununterbrochene Programmausführung auf dem Mikrokontrollers wird bei diesem Konzept nur dann zugelassen, wenn die Überwachungsfunktion nach Überprüfung durch die Steuerungsfunktion ordnungsgemäß aufgerufen wurde und wenn die Überwachungsfunktion die korrekte Funktion der Steuerungsfunktion feststellt und den Watchdog triggert.

Der Watchdog ist vorzugsweise so ausgeführt, dass eine erfolgreiche Triggerung die vollständige Funktion des Mikrokontrollers voraussetzt. Somit führen Fehler im Mikrokontroller zu Abschaltungen des Steuergerätes 20. Gemäß einer besonders bevorzugten Ausführungsform beinhaltet eine Triggerung des Watchdogs, dass die Überwachungsfunktion eine Anfrage des Watchdogs erhält, dass aufgrund der Anfrage die Überwachungsfunktion auf dem Mikrokontroller vorgegebene Operationen ausführt und auf der Grundlage dieser Operationen eine Antwort bereitstellt, und dass der Watchdog die Antwort mit einem Erwartungswert vergleicht. Dadurch weist die Überwachungsfunktion gegenüber dem Watchdog ein ordnungsgemäßes Funktionieren des Mikrokontrollers nach.

In einer Ausführungsform sind der Überwachungsfunktion 24 auch Eingänge zum Erfassen von Zustandsgrößen der hydraulischen Komponenten zugeführt. Somit werden nicht nur die Stellgrößen für die hydraulischen Komponenten kontrolliert, sondern auch nachfolgende Glieder der Steuerkette. Dies bietet zusätzliche Sicherheit, weil somit sowohl die fehlerhafte Vorgabe einer Stellgröße durch die Steuerungsfunktion als auch zusätzliche Fehler der nachfolgenden Glieder der elektrohydraulischen Steuerkette detektiert werden.

In einer Ausführungsform weist das Steuergerät eine erste Abschalteinrichtung und eine zweite Abschalteinrichtung auf, die beide unabhängig voneinander durch die Überwachungsfunktion bzw. durch die Steuerungsfunktion betätigt werden können. Die Abschalteinrichtungen können z.B. einen Trennschalter für eine Leistungsversorgung von Ausgangsendstufen, einen Resetmechanismus des Mikrokontrollers oder eine erzwungene Vorgabe eines sicheren Sollwerts an die Steuerungsfunktion sein. Die Steuerungsfunktion kann des Weiteren die Ausgänge auf einen sicheren Stellwert - in der Regel stromlos - ansteuern.

In einer Ausführungsform wird ein nichtflüchtiger Datenspeicher - beispielsweise ein EEPROM-Speicher oder ein Flash-Speicher - folgendermaßen abgesichert bzw. durch die Überwachungsfunktion geprüft: Der Datenspeicher ist in Datenblöcke, so genannte Pages, unterteilt. Die Daten werden auf einer Page gespeichert und ein zweites Mal in anderer Form auf einer zweiten Page im Datenspeicher, der so genannten Shadowpage gespeichert. Beim Schreiben wird jeweils für die Page und die Shadowpage eine Prüfsumme gerechnet und ebenfalls gespeichert.

Bei jedem Lesen von Daten aus dem Datenspeicher erfolgt ein Vergleich der Daten zwischen Page und Shadowpage. Die Prüfsummen der Page und der Shadowpage werden zudem neu berechnet und mit den gespeicherten Prüfsummen verglichen. Bei einem Vergleichsfehler oder einem Prüfsummen-Fehler werden die Daten abhängig vom Fehler wechselseitig restauriert. Falls bei Auftreten von mehreren Fehlern eine Restauration nicht möglich ist, wird eine Fehlermeldung generiert und das Gesamtsystem in einen definierten Zustand überführt. Vorzugsweise führt die Überwachungsfunktion Prüfzugriffe auf den besagten nichtflüchtigen Datenspeicher durch.

Besonders vorteilhaft ist das erfindungsgemäße Hydraulikkomponenten-Steuergerät für Antriebshydrauliken oder Arbeitshydrauliken von mobilen Arbeitsmaschinen. Solche mobilen Arbeitsmaschinen bilden aufgrund ihrer Größe und ihrer leistungsstarken Antriebe regelmäßig Risiken für ihre Umgebung.

Wenn sich die Überwachungsfunktion und die Steuerungsfunktion abwechselnd gegenseitig aufrufen, kann schon der nicht innerhalb einer bestimmten Zeit erfolgte Aufruf als Fehlerzustand erkannt werden. Diese Zeit ist zweckmäßiger Weise die Fehlertoleranzzeit, innerhalb der sich ein Fehler noch nicht kritisch auswirkt. Die Erkennung eines solchen Fehlerzustands erfolgt z.B. über einen Watchdog.

Wenn die Überwachungsfunktion auf einen anderen Speicherbereich zugreift als die Steuerungsfunktion, ist eine einfache Architektur vorhanden, in der Fehler durch unvorhergesehene Speicherzugriffe leicht erkannt werden können.

In einer Ausführungsform führt die Überwachungsfunktion die Berechungen zur Überwachung der Steuerungsfunktion jeweils zweifach durch, wobei die Berechnungen in unterschiedlichen Speicherbereichen durchgeführt werden. Damit wird dafür gesorgt, dass die Wahrscheinlichkeit für das Nichtentdecken eines Fehlers in der Überwachungsfunktion sinkt.

Außerdem kann vorgesehen werden, dass die Überwachungsfunktion einen Prüfsummen-Speichertest eines Speicherbereichs durchführt, in welchem der Programmcode u.A. der Überwachungsfunktion oder der Steuerungsfunktion abgelegt sind, damit Fehler schnell erkannt werden.

In einer Ausführungsform wird die Überwachungsfunktion mehrmals aufgerufen und am Anfang und am Ende eines jeden Aufrufs wird jeweils eine Prüfsumme ihres Speicherbereichs berechnet. Die Prüfsumme, die am Anfang eines Aufrufs berechnet wird, wird mit der Prüfsumme, die am Ende de jeweilig vorherigen Aufrufs berechnet wurde, verglichen. Somit wird überprüft, ob der für die Überwachungsfunktion vorgesehene Speicherbereich von anderen Funktionen unzulässig überschrieben wurde.

Ausführungsbeispiele der Erfindung werden im Folgenden anhand der beigefügten Figuren näher erläutert.
- Figur 1: zeigt den Aufbau eines erfindungsgemäßen Hydraulikkomponenten-Steuergeräts.
- Figur 2: zeigt die Schritte eines Verfahrens zur Überwachung des Hydraulikkomponenten-Steuergeräts.

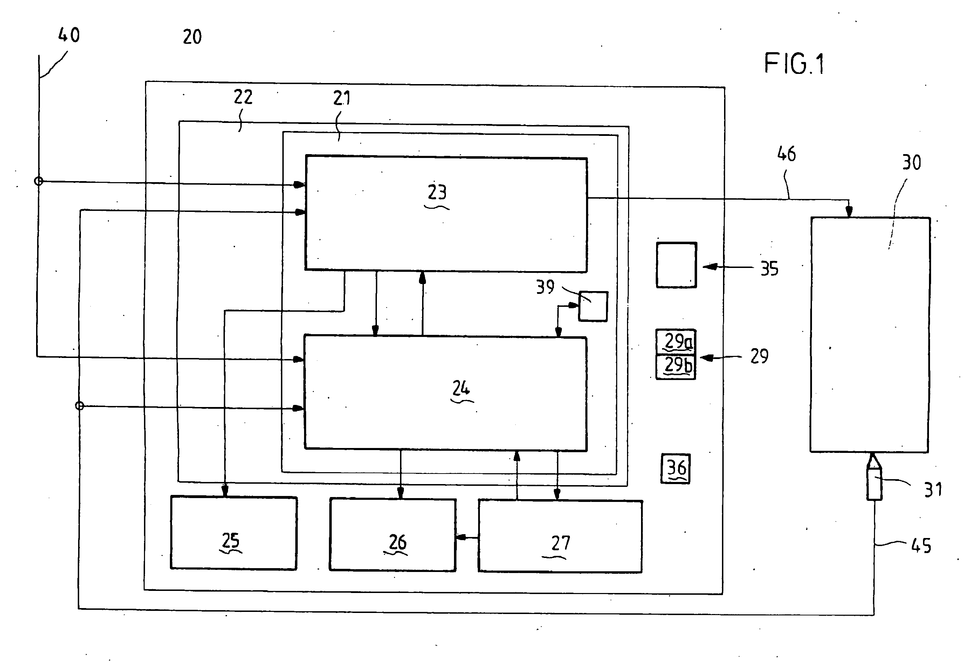

Figur 1 zeigt den Aufbau eines erfindungsgemäßen Hydraulikkomponenten-Steuergeräts 20. Bei der Anwendung kommt ein Hydraulikkomponenten-Steuergerät 20, im Folgenden auch Steuergerät 20 genannt, der Firma Bosch Rexroth zum Einsatz. Das Steuergerät 20 enthält einen Mikrocontroller 22, eine erste Abschaltvorrichtung 25, eine zweite Abschaltvorrichtung 26 und einen externen Watchdog 27. Der Mikrocontroller 22 ist einkanalig aufgebaut, enthält demgemäß also einen Prozessor 21. In dem Steuergerät 20 sind neben dem Mikrocontroller 22 auch ein RAM-Speicher 29, ein Flashspeicher 35 und ein EEPROM-Speicher 36 jeweils als einzelne Bauelemente vorgesehen.

Innerhalb des Mikrocontrollers 22 sind die Steuerungsfunktion 23 und die Überwachungsfunktion 24 als Softwareprogramme implementiert. Die Steuerungsfunktion 23 und die Überwachungsfunktion 24 empfangen jeweils das Vorgabesignal 40, das die beiden Funktionen von außen steuert. Die Steuerungsfunktion 23 steuert über das Stellsignal 46 die hydraulischen Komponenten 30, die jeweils eine Antriebs- oder Arbeitsfunktion haben. Die hydraulischen Komponenten sind beispielsweise hydraulische Motoren (Hydromotoren) oder' hydraulische Pumpen. Die Messfühler 31 messen den Zustand der hydraulischen Komponenten 30, beispielsweise ihren Steuerdruck oder ihren Schwenkwinkel. Die entsprechenden Messwerte werden über die Rückkopplungssignalleitung 45 sowohl zu der Steuerungsfunktion 23 als auch zu der Überwachungsfunktion 24 geleitet.

Die Überwachungsfunktion 24 wird in regelmäßigen Abständen von der Steuerungsfunktion 23 aufgerufen und überprüft die Funktion der Steuerungsfunktion 23. Zudem überprüft die Überwachungsfunktion 24 auch sich selbst und die Steuerungsfunktion 23 überprüft auch die Funktion der Überwachungsfunktion 24. Die Steuerungsfunktion 23 und die Überwachungsfunktion 24 benutzen den RAM-Speicher 29 als Arbeitsspeicher. Dabei gibt es einen ersten Speicherbereich 29a, den nur die Steuerungsfunktion 23 verwendet, während den zweiten Speicherbereich 29b lediglich die Überwachungsfunktion 24 verwendet. Die Überwachungsfunktion 24 wird im Folgenden auch als Monitor 24 bezeichnet.

Auf den Flash-Speicher 35 haben die Steuerungsfunktion 23 bzw. die Überwachungsfunktion 24 nur Lesezugriff.

Dadurch, dass auf die ersten und zweiten Speicherbereiche 29a und 29b im fehlerfreien Betrieb nur von einer der Funktionen 23 und 24 schreibend zugegriffen wird, können Fehler durch unerlaubte Speicherzugriffe einfach erkannt werden.

Die erste Abschalteinrichtung 25 wird von der Steuerungsfunktion 23 aktiv betätigt, wenn die Steuerungsfunktion 23 einen Fehler detektiert. Entsprechend wird die zweite Abschalteinrichtung 26 betätigt, wenn die Überwachungsfunktion 24 einen Fehler detektiert. Die erste Abschalteinrichtung 25 und die zweite Abschalteinrichtung 26 können jeweils das Steuergerät 20 ausschalen. Der Watchdog 27 kann die zweite Abschalteinrichtung 26 ebenfalls aktiv betätigen, um das Steuergerät 20 bzw. dessen Stellsignal 46 abzuschalten. Beispiele für solche Abschalteinrichtungen 25 und 26 sind ein Zentralschalter, d.h. ein Trennschalter für die Leistungsversorgung eines Ausgangsverstärkers, verschiedene Resetmechanismen des Mikrokontrollers oder eine erzwungene Vorgabe eines sicheren Sollwerts an die Steuerungsfunktion sein. Die Steuerungsfunktion kann des Weiteren die Ausgänge auf einen sicheren Stellwert - in der Regel stromlos - ansteuern.

In der gezeigten Ausführungsform sind die Abschalteinrichtungen 25 und 26 außerhalb des Mikrokontrollers 22 vorgesehen. Es sind auch Ausführungsformen möglich, bei denen die Abschalteinrichtungen 25 und 26 im Mikrokontroller 22 vorgesehen sind.

Der externe Watchdog 27 wird von dem Monitor 24 getriggert. Dies bedeutet, dass der Monitor 24 in regelmäßigen Abständen ein Triggersignal 42 ausgibt. Falls der externe Watchdog 27 das Triggersignal nicht erhält, schaltet er innerhalb der Fehlertoleranzzeit den Zentralschalter des Steuergeräts 20 ab. Außerdem wird vorzugsweise nach einer weiteren Verzögerung ein Reset des Mikrokontrollers 22 ausgelöst. Diese Verzögerung ist vorgesehen, damit der Steuerungsfunktion 23 Zeit verbleibt, die Ursache des Fehlers abzuspeichern.

Der Zentralschalter ist ein Leistungsschalter im Steuergerät 20, der alle Leistungsausgänge des Steuergeräts 20 gleichzeitig abschaltet. Daneben kann jeder Ausgang einzeln ausgeschaltet werden. Einzeln können die Ausgänge nur eingeschaltet werden, wenn auch der Zentralschalter eingeschaltet ist.

Zusätzlich zu dem externen Watchdog 27 ist in dem Mikrokontroller 22 ein interner Watchdog 39, der ebenfalls von der Überwachungsfunktion 24 getriggert wird, vorgesehen. Der externe Watchdog 27 bietet eine höhere Sicherheit als der interne Watchdog 39, da ein Fehler innerhalb des Mikrokontrollers 22 auch den internen Watchdog 39 beeinflussen kann.

Für die angesteuerten hydraulischen Komponenten 30 der mobilen Arbeitsmaschine hat die Risikoanalyse für einige Sicherheitsfunktionen Performance Level d entsprechend der Eingangs genannten Norm DIN EN ISO 13849-1:2006 ergeben. Dieser Performance Level wird vorzugsweise mit einer der Kategorie 3 entsprechenden Struktur dargestellt.

Kategorie 3 bzw. 4 bedeutet, dass ein Einzelfehler in einer Systemkomponente, die die Sicherheitsfunktion beeinflusst, nicht zum Verlust der Sicherheitsfunktion führen darf. Alle Fehler, die zum Verlust der Sicherheitsfunktion führen, müssen innerhalb der Zeit, in der sich der Fehler kritisch auswirken kann, aufgedeckt werden können und ein Überführen des Systems in einen sicheren Zustand muss gewährleistet sein, oder die Fehler müssen über wirksame externe Maßnahmen bzgl. des elektronischen Steuerungssystems behandelt werden.

Nachfolgend werden Aufbau und Funktion des Monitors 24 und dessen Interaktion mit der Steuerungsfunktion 23 näher erläutert.

Der Monitor 24 besteht aus einem eigenen Programmteil mit von den Adressen her separiertem Flash- und RAM-Bereich. Der Monitor 24 überwacht sich selbst und die Steuerungsfunktion 23. Zudem wertet der Monitor 24 die Ergebnisse von Selbsttestfunktionen des Mikrokontrollers 22 aus. Diese sind üblicherweise in einem Bios des Mikrokontrollers 22 vorhanden. Der Monitor kann über den externen Watchdog 27 das Steuergerät 20 abschalten bzw. andere Maßnahmen einleiten, um das System in einen sicheren Zustand zu überführen. Die Steuerungsfunktion 23 überwacht den Monitor 24 und kann das System im Fehlerfall ebenfalls abschalten.

Durch die gegenseitige Überwachung des Monitors 24 und der Steuerungsfunktion 23 wird sichergestellt, dass Fehler in einer der beiden Funktionen rechtzeitig erkannt werden, auch wenn sie innerhalb der eigenen Funktion nicht erkannt werden. Das Aufteilen der Speicherbereiche in solche, die nur von der Steuerungsfunktion 23 und solche, die nur von der Überwachungsfunktion 24 überprüft werden können, sowie die umfangreichen Selbsttests im Monitor 24 - wie später noch genauer beschrieben - und die Verwendung eines Watchdogs, der die einwandfreie Funktion des Mikrokontrollers 22 voraussetzt bewirken, dass der Mirkokontroller 22 und die Speicherbausteine selbst nicht mehrkanalig vorgesehen werden müssen. Der Monitor 24 wird regelmäßig von der Steuerungsfunktion 23 aufgerufen. Die Steuerungsfunktion wartet ihrerseits auf die korrekte Abarbeitung der Überwachungsfunktion bevor weitere Stellwerte berechnet werden. Dadurch wird die Fehlerfreiheit der Überwachungsfunktion 24 in geeigneten Zeitabständen getestet, was eine Anforderung für die Kategorie 3 ist.

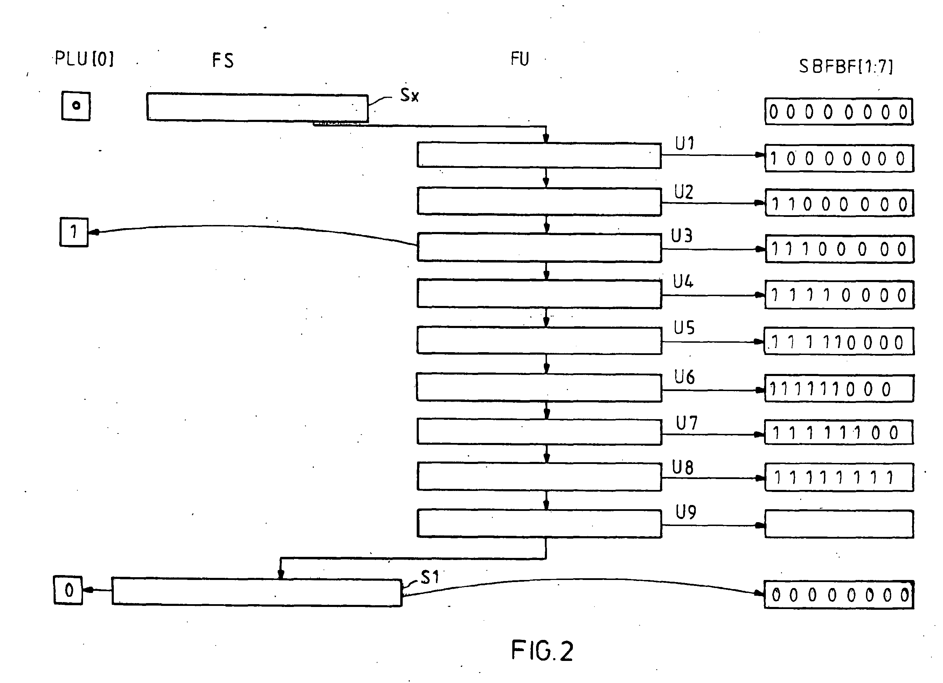

In Figur 2 wird der Aufruf der Überwachungsfunktion 24 sowie die darin ablaufenden Prüfungen erläutert.

Dabei ist die Figur 2 in vier Spalten aufgeteilt. In der ersten Spalte ist eines der Programmlaufüberwachungsbits PLU der Steuerungsfunktion 23 eingezeichnet. In der zweiten Spalte sind die Programmschritte der Steuerungsfunktion 23, in der dritten Spalte die Programmschritte des Monitors 24 und in der rechten Spalte die Monitorfreigabebits SBFPF [1:7] eingezeichnet. Als erster Schritt ist der Programmschritt Sx der Steuerungsfunktion 23 angezeigt, der die Überwachungsfunktion 24 und dabei den ersten Programmschritt U1 der Überwachungsfunktion aufruft. Während des Schrittes Sx ist das Programmlaufüberwachungsbit PLU[0] auf Null und die Monitorfreigabebits SBFPF [1:7] sind alle auf Null.

Bei dem Aufruf des Monitors wird in dem Schritt U1 die Prüfung mittels der CRC 16 - Prüfsumme (CRC = cyclic redundancy check) des ersten Speicherbereichs 29b vorgenommen. Dabei wird überprüft, ob die Prüfsumme sich von der Prüfsumme, die am Ende des vorherigen Zyklus berechnet wurde, unterscheidet. Falls die beiden CRC 16- Prüfsummen gleich sind, wird davon ausgegangen, dass der Inhalt des zweiten Speicherbereichs 29b nicht zwischenzeitlich unzulässig beschrieben wurde.

Falls die sich Prüfsummen vom Ende des letzten und vom Anfang des jetzigen Zyklus unterscheiden, wird davon ausgegangen, dass verbotene Speicherübergriffe durch andere Softwareteile, beispielsweise durch Interrupts oder durch die Steuerungsfunktion 23 erfolgt sind oder dass der Speicherbereich hardwareseitig nicht einwandfrei arbeitet.

Es wird in Schritt U1 zudem geprüft, ob die Steuerungsfunktion 23 die Monitorfreigabebits SBFBF [1:7] korrekt auf Null zurückgesetzt hat. Falls diese Tests keinen Fehler ergeben, wird das Bit 1 im Freigabebitfeld SBFBF auf 1 gesetzt.

Im Schritt U2 werden der RAM-Stuck-to-Test und der Koppelfehlertest durchgeführt. Falls beide ergeben, dass kein Fehler vorliegt, wird das Bit SBFBF[2] auf 1 gesetzt. Zudem wird vor dem Setzen eines SBFBF Bits geprüft, ob die von den vorher auszuführenden Schritten - hier U1 - zu setzenden Bits tatsächlich gesetzt wurden. Damit ist auch die korrekte Abarbeitung der Überwachungsfunktion 24 überprüfbar.

Der vom Monitor 24 verwendete zweite RAM-Speicherbereich 29b wird in Strukturen zusammengefasst. Über diese Strukturen wird vor Ausführung des Monitors 24 in jedem Zyklus ein Selbsttest ausgeführt. Dieser Test erfasst Stuck-to-Fehler und einfache Koppelfehler zwischen Daten- und/oder Adressleitungen untereinander. Stuck-to-Fehler sind Einzelfehler, bei denen eine Speicherzelle immer einen festen Wert ausgibt, auch wenn sie vorher eigentlich mit einem anderen Wert beschrieben wurde. Durch die Stuck-To-Prüfungen wird das RAM mit Erwartungswerten belegt und geprüft. Dadurch werden auch Fehler in den RAM Zugriffen aufgedeckt. Koppelfehler führen zu Veränderungen von mehreren Speicherbereichen gleichzeitig, wenn nur beabsichtigt ist, einzelne Speicherbereiche zu verändern. Um die Überwachungsfunktion zu testen, werden beispielsweise beim Inbetriebnahmetest durch ein Zusatzmodul über bedingte Kompilierung, das über CAN-Bus-Reizung RAM-Bereiche konfiguriert, Fehler indiziert. Mittels dieser indizierten Fehler wird überprüft, ob der Monitor den Fehler entdeckt.

In Schritt U3 wird die logische Programmlaufüberwachung der Applikation durchgeführt.

In diesem Schritt wird geprüft, ob das Flag PLU [0] korrekt auf Null gesetzt ist. Falls dies der Fall ist, werden das Bit PLU[0] sowie das Bit SBFBF [3] jeweils auf Eins gesetzt.

Im Schritt U4 wird der Flashspeicher, in dem der Monitor 24 implementiert ist, getestet.

Der Monitor 24 ist in einer eigenen ROM-Sektion lokalisiert. Diese Sektion wird zyklisch mit einer linearen Prüfsumme auf Veränderung gegenüber dem Hochlauf geprüft. Aus Laufzeitgründen wird pro Zyklus U1 bis U9 nur ein Teil der Prüfsumme berechnet. Nach mehreren durchlaufenen Zyklen ist - noch innerhalb der Fehlertoleranzzeit - der gesamte Bereich durchgerechnet und es kann der Vergleich mit der Prüfsumme beim Hochlauf erfolgen.

Die Korrektheit des Flashs beim Hochlauf würde bei Systemstart durch das BIOS über die CRC-Prüfsummen-Prüfung überprüft.

Falls in dem Schritt U4 kein Fehler auftrat, wird das Bit SBFBF[4] auf 1 gesetzt.

Die korrekte Verarbeitung von CPU Befehlen wird über Musterrechnungen mit festgelegten Ergebnissen geprüft. Ein zyklischer CPU-Test wird vom BIOS ausgeführt. Das Ergebnis aller BIOS-internen Tests wird von der Überwachungsfunktion 24 abgefragt.

In Schritt U5 werden die Überwachungsfunktionen 1. Instanz durchgeführt. Der Monitor 24 berechnet u.A. unabhängig von der Steuerungsfunktion 23 die von der Steuerungsfunktion auszugebenden Stellwerte. Dabei werden nicht nur die elektronischen Steuerungsfunktionen bis zum Aktuator, sondern des gesamten Antriebstangs über die Rückkopplung von Ausgangssignalen wie Drehzahlen, Hydraulikdrücken bei Fahrantriebsfunktionen oder Winkel bei Arbeitshydraulikfunktion überprüft. Dadurch werden alle über die Steuerungsfunktion verfügbaren Sensorinformationen in die Überwachung mit einbezogen. Durch die Verwendung der Sensorinformationen auch in der Steuerungsfunktion selbst ist die Verfügbarkeit der Signale ständig prüfbar und es entstehen keine erhöhten Stückkosten für die Darstellungen der Sicherheitsfunktion.

In Schritt U6 werden die Überwachungsroutinen auf einer zweiten Instanz des Monitors 24 durchgeführt. Die Prüfung der applikationsspezifischen Sicherheitsfunktionen erfolgt über zwei Instanzen dieser Struktur. Auf den beiden wird nacheinander gerechnet. Die Ergebnisse werden verglichen. Bei der Berechnung auf der zweiten Instanz wird die gleiche Software Routine in gleicher Hardware, die aber auf einem anderen Datensatz arbeitet, durchgeführt. Der Datensatz ist inhaltlich gleich, von daher wird auch gleiches Rechenergebnis erwartet. Ist dies nicht der Fall, kann auf eine Verfälschung eines der beiden Datensätze geschlossen werden, z.B. durch Interrupts während der Abarbeitung und RAM Überschreibungen.

In Schritt U7 werden die Ergebnisse aus den Schritten U1 bis U6 mit Erwartungswerten verglichen. Je nach Ergebnis des Vergleichs werden definierte Maßnahmen eingeleitet und das Bit SBFBF[7] gesetzt.

Wenn durch den Monitor 24 ein fehlerhafter Zustand erkannt wurde, wird eine entsprechende Maßnahme eingeleitet. Diese Maßnahmen umfassen die Aktivierung der beschriebenen Abschalteinrichtungen. Insbesondere unterbleibt auch die Triggerung des externen Watchdogs 27, wodurch eine zuverlässige Einleitung der Abschaltung bzw. die Herstellung eines sicheren Zustandes gewährleistet ist.

Die Triggerung des Watchdogs 27 erfolgt in der Art, dass ein Nachweis der ordnungsgemäßen Funktion des Mikrokontrollers 20 gegenüber dem Watchdog 27 erbracht wird. Die Überwachungsfunktion erhält eine Anfrage des Watchdogs 27, auf die sie antworten muss, um die Triggerung zu bewerkstelligen. Das Bereitstellen der Antwort erfordert z.B. Berechnungsvorgänge auf dem Prozessor 21, die Abfrage von Eingangsgrößen, ein Auslesen des Flashspeichers 35, etc. Der Watchdog prüft die Antwort und akzeptiert die Triggerung falls die Antwort einem erwarteten Wert oder Wertebereich entspricht. Andernfalls führt der Watchdog 27 einen sicheren Zustand herbei.

Folgende Bedingungen müssen erfüllt sein, damit durch den Monitor 24 keine Abschaltung erfolgt:
- Wesentliche Teile der Applikation sind ausgeführt worden. Das wird über die Freigabe-Flags PLU erfasst. Sie werden in der Applikation gesetzt, im Monitor 24 ausgewertet und zurückgesetzt. Das entspricht einer logischen Programmlaufüberwachung der Applikation durch den Monitor 24.
- Alle Selbstprüfungen des Monitors 24 sind positiv verlaufen. Erkannte Fehler werden nicht zurückgesetzt.
- Die Berechnung der Sicherheitsfunktionen im Monitor ergeben kein Fehlverhalten.

Eine andere Reaktionsmöglichkeit ist die Ausgabe eines Warnhinweises an den Bediener. Wenn ein Fehler erkannt wird, dann werden der Bediener der Maschine und/oder die Umgebung optisch oder akustisch gewarnt. In der Bedienungsanleitung für die Maschine ist vermerkt, wie der Bediener auf Warnhinweise zu reagieren hat.

Der Monitor 24 kann mit höherer Priorität als die Steuerungsfunktion 23 auf z.B. einen Drehzahlsollwert eines Dieselmotors einer angesteuerten Arbeitsmaschine einwirken und ihn reduzieren.

Bei einem durch das Steuergerät 20 angesteuerten Hydromotor kann der Monitor 24 den von der Steuerungsfunktion errechneten Stellwert so zurücksetzen, dass der Hydromotor in Richtung des minimalen Schwenkwinkels schwenkt.

Als weitere Reaktionsmöglichkeit ist die Unterbrechung der Ölversorgung der Hydraulik vorgesehen, die zum Beispiel durch ein Ventil am Hydraulikblock erfolgt. Dies ist in der Regel für Arbeitshydrauliken relevant.

In Schritt U8 werden der interne Watchdog 39 und der externe Watchdog 27 getriggert, falls sich aus den Schritten U1 bis U7 ergab, dass die Einleitung eines sicheren Zustands nicht notwendig ist.

Nach der Ausführung des Monitors 28 wird in Schritt U9 über den Inhalt des zweiten Speichers 29b erneut eine CRC-16 Checksumme gebildet. Anschließend wird wieder an die Steuerungsfunktion 23 übergeben, die den Schritt S1 ausführt. In diesem wird geprüft, ob der Monitor 24 das Freigabe-Bitfeld SRFBF vollständig auf 1 gesetzt hat. Somit überprüft auch die Steuerungsfunktion 23 die Überwachungsfunktion 24, was die Wahrscheinlichkeit, dass Fehler in dem Monitor 24 entdeckt werden, erhöht.

Als Beispiel für die Überwachung einer hydraulischen Komponente wird die Überwachung eines verstellbaren Hydromotors gewählt. Am Hydromotor kann zum Einen das Stellsignal, also dessen Schluckvolumen, und zum Anderen die Drehzahl erfasst werden. Weiter kann z.B. der Zustand einer Parkbremse und die im hydraulischen System zur Verfügung stehenden Drücke erfasst werden. Die Drehzahl des Hydromotors wird von den genannten Größen in einer vorhersehbaren Weise beeinflusst. Zunächst wird das ausgegebene Stellsignal nämlich der Strom für die Einstellung des Schwenkwinkels überprüft. Damit wird die korrekte Funktion der Steuerungsfunktion 23 festgestellt. Zusätzlich wird anhand z.B. der Drehzahl die Reaktion des Hydromotors auf die Stellsignale geprüft. Da das Verhalten von Schwenkwinkel und Drehzahl von den vorgenannten weiteren Messgrößen abhängt, ist die Funktion des hydraulischen Systems prüfbar.

Um das Ansprechen des Hydromotors auf die Steuerungsfunktion 23 sicher zu gewährleisten, wird die Verstellung des Hydromotors im Fahr-Betrieb immer wieder durchgeführt und überprüft.

Um die Überwachungsfunktion 24 zu testen, werden beim Inbetriebnahmetest durch ein Zusatzmodul ein Offset auf den gemessenen Ist-Steuerwert bzw. die Hydromotordrehzahl addiert, um den Fehler zu provozieren. Mittels dieses indizierten Fehlers wird überprüft, ob der Monitor 24 den Fehler entdeckt.

Generell kann ein nichtflüchtiger Datenspeicher - beispielsweise ein EEPROM-Speicher oder ein Flash-Speicher - folgendermaßen gegen Fehler abgesichert bzw. durch die Überwachungsfunktion geprüft werden: Der Datenspeicher ist in Datenblöcke, so genannte Pages, unterteilt. Die Daten werden auf einer Page gespeichert und ein zweites Mal in anderer Form auf einer zweiten Page im Datenspeicher, der so genannten Shadowpage gespeichert. Beim Schreiben wird jeweils für die Page und die Shadowpage eine Prüfsumme berechnet und ebenfalls gespeichert.

Bei jedem Lesen von Daten aus dem Datenspeicher erfolgt ein Vergleich der Daten zwischen Page und Shadowpage. Die Prüfsummen der Page und der Shadowpage werden zudem neu berechnet und mit den gespeicherten Prüfsummen verglichen. Bei einem Vergleichsfehler oder einem Prüfsummen-Fehler werden die Daten abhängig vom Fehler wechselseitig restauriert. Falls bei Auftreten von mehreren Fehlern eine Restauration nicht möglich ist, wird eine Fehlermeldung generiert und das Gesamtsystem in einen definierten Zustand überführt.

Im Betrieb kann die Überwachungsfunktion Prüfzugriffe auf den besagten nichtflüchtigen Datenspeicher durchführen und so die Fehlerfreiheit testen. Das Lesen der Daten aus dem nichtflüchtiger Datenspeicher wird z.B. durch einen Funktionsaufruf bewerkstelligt. Treten dabei, wie beschrieben, Fehler auf oder kann ein Datenwert innerhalb des Funktionsaufrufs nicht restauriert werden, wird z.B. über die Überwachungsfunktion der sichere Zustand des Systems eingeleitet.

### Bezugszeichenliste

- 20: Steuergerät
- 21: Prozessor
- 22: Mikrokontroller
- 23: Steuerungsfunktion
- 24: Überwachungsfunktion
- 25: erste Abschalteinrichtung
- 26: zweite Abschalteinrichtung
- 27: externer Watchdog
- 29: RAM-Speicher
- 29a: erster Speicherbereich
- 29b: zweiter Speicherbereich
- 30: Antriebs- oder Arbeitsfunktion
- 31: Sensoren
- 35: Flash-Speicher
- 36: EEPROM
- 39: interner Watchdog
- 40: Vorgabesignale
- 45: Rückkoppelsignalleitung
- 46: Stellsignal

## Patentansprüche

1. Verfahren zum Steuern von hydraulischen Komponenten mittels eines Steuergeräts (20), das einen Mikrokontroller (22) aufweist, wobei das Verfahren folgende Schritte aufweist:
- Ansteuern der hydraulischen Komponenten mittels einer in dem Mikrokontroller (22) implementierten Steuerungsfunktion (23);
- Überwachen der Steuerungsfunktion (23) mit Hilfe einer auch im Mikrokontroller (22) implementierten Überwachungsfunktion (24);
- Überwachen der Überwachungsfunktion (24) durch die Steuerungsfunktion (23).

2. Verfahren nach Anspruch 1, **dadurch gekennzeichnet, dass** die Überwachungsfunktion (24) und die Steuerungsfunktion (23) abwechselnd aufgerufen werden und dass ein fehlerhafter Aufruf wechselseitig erkannt wird.

3. Verfahren nach Anspruch 1 oder 2, **dadurch gekennzeichnet, dass** ein nächster Aufruf der Überwachungsfunktion (24) durch die Steuerungsfunktion (23) bzw. ein nächster Aufruf der Steuerungsfunktion (23) durch die Überwachungsfunktion (24) von einem Ergebnis des durch die jeweils aufrufenden Funktion (23, 24) durchgeführten Überwachungsschritts abhängig ist.

4. Verfahren nach einem der Ansprüche 1 bis 3, **dadurch gekennzeichnet, dass** in Abhängigkeit von einem Ergebnis der Überwachungsschritte, insbesondere bei Erkennen eines Fehlers, eine Ansteuerung eines sicheren Zustands erzwungen wird.

5. Verfahren nach einem der Ansprüche 1 bis 4, **dadurch gekennzeichnet, dass** der durch die Überwachungsfunktion (24) ausgeführte Überwachungsschritt eine Selbstüberwachung der Überwachungsfunktion (24) umfasst.

6. Verfahren nach Anspruch 5, **dadurch gekennzeichnet, dass** in einem nichtflüchtigen Datenspeicher, insbesondere einem EEPROM, Daten redundant abgespeichert sind und jeweils über eine Prüfsumme abgesichert sind, und dass beim Lesen der Daten eine Prüfung auf der Grundlage der Prüfsumme und/oder der Redundanz stattfindet, wobei insbesondere eine Korrektur der ausgegebenen Daten stattfindet.

7. Verfahren nach einem der Ansprüche 1 bis 6, **dadurch gekennzeichnet, dass** die Überwachungsfunktion in Abhängigkeit von einem Ergebnis des durch sie durchgeführten Überwachungsschritts einen Watchdog (27) triggert.

8. Verfahren nach Anspruch 7, **dadurch gekennzeichnet, dass** eine wiederholte Triggerung des Watchdogs eine fehlerfreie Funktion des Mikroprozessors voraussetzt, wobei seit einer vorherigen Triggerung zumindest die Überwachung der Überwachungsfunktion durch die Steuerungsfunktion und der Überwachungsschritt der Überwachungsfunktion ohne Auffinden eines Fehlers abgearbeitet wurden.

9. Verfahren nach Anspruch 7 oder 8, **dadurch gekennzeichnet, dass** eine Triggerung des Watchdogs beinhaltet, dass die Überwachungsfunktion eine Anfrage des Watchdogs erhält, dass aufgrund der Anfrage die Überwachungsfunktion auf dem Mikrokontroller vorgegebene Operationen ausführt und auf der Grundlage dieser Operationen eine Antwort bereitstellt, und dass der Watchdog die Antwort mit einem Erwartungswert vergleicht.

10. Verfahren nach einem der Ansprüche 1 bis 9, wobei das Steuergerät (20) einen Speicher (29) mit einem ersten Speicherbereich (29a) und einem zweiten Speicherbereich (29b) aufweist, wobei der ersten Speicherbereich (29a) nur von der Steuerungsfunktion (23) beschrieben wird und wobei der zweiten Speicherbereich (29b) nur von der Überwachungsfunktion (24) beschrieben wird.

11. Verfahren nach Anspruch 10, **dadurch gekennzeichnet, dass** die Überwachungsfunktion (24) einen Speichertest des ersten Speicherbereichs (29a) durchführt.

12. Verfahren nach einem der Ansprüche 10 oder 11, **dadurch gekennzeichnet, dass** die Überwachungsfunktion (24) mehrmals aufgerufen wird, und dass am Anfang und am Ende eines Aufrufs jeweils eine Prüfsumme des zweiten Speicherbereichs (29b) berechnet wird, wobei die Prüfsumme, die am Anfang eines Aufrufs berechnet wird, mit der Prüfsumme, die am Ende des jeweilig vorherigen Aufrufs berechnet wurde, verglichen wird.

13. Verfahren nach einem der Ansprüche 10 bis 12, **dadurch gekennzeichnet, dass** die Überwachungsfunktion (24) Berechungen zur Überwachung der Steuerungsfunktion (23) jeweils zweimal durchführt, wobei die Berechnungen in unterschiedlichen Bereichen des zweiten Speicherbereichs durchgeführt werden.

14. Verfahren nach Anspruch 4, **dadurch gekennzeichnet, dass** die Ansteuerung eines sicheren Zustandes einen der folgenden Schritte umfasst, nämlich eine Abschaltung von Ausgängen des Steuergeräts (20), einen Reset des Mikrokontrollers (22), ein Überschreiben einer Sollwertvorgabe der Steuerungsfunktion (23).

15. Hydraulikkomponenten-Steuergerät zum Steuern von hydraulischen Komponenten, mit einem Mikrokontroller (22), in welchem eine Software zur Ausführung des Verfahrens nach einem der Ansprüche 1 bis 14 vorgehalten ist.

16. Hydraulikkomponenten-Steuergerät nach Anspruch 15, **dadurch gekennzeichnet, dass** ein Watchdog (27) zur Überwachung der Funktionen eines Prozessors (21) des Mikrokontrollers (22) vorgesehen ist, wobei der Watchdog (27) in einer Schaltung außerhalb des Prozessors (21) vorgesehen ist und der Watchdog (27) seine Eingangssignale von der Überwachungsfunktion (24) empfängt.

17. Hydraulikkomponenten-Steuergerät nach einem der Ansprüche 15 oder 16, **dadurch gekennzeichnet, dass** der Überwachungsfunktion (24) Eingänge zur Erfassung von Zustandsgrößen der hydraulischen Komponenten (30) zugeführt sind.

18. Hydraulikkomponenten-Steuergerät nach einem der Ansprüche 15 bis 17, **dadurch gekennzeichnet, dass** eine erste Abschalteinrichtung (25) und eine zweite Abschalteinrichtung (26) vorgesehen sind, wobei diese Abschalteinrichtungen (25, 26) unabhängig voneinander durch die Überwachungsfunktion (24) bzw. die Steuerungsfunktion (23) ansteuerbar sind.

19. Verwendung eines Hydraulikkomponenten-Steuergerät nach einem der Ansprüche 15 bis 18 für Antriebshydrauliken oder Arbeitshydrauliken von mobilen Arbeitsmaschinen.
